# FASCICULE DE BREVET EUROPEEN

(11) **EP 1 879 783 B1**
(45) Date de publication et mention de la délivrance du brevet: **21.03.2012**
(21) Numéro de dépôt: 06755482.4
(22) Date de dépôt: 10.05.2006
(51) Int. Cl.: F16B 21/08, B62D 1/16

(54) **CORPS CREUX EN MATIERE PLASTIQUE, NOTAMMENT POUR L'HABILLAGE DE COLONNES DE DIRECTION DE VEHICULE AUTOMOBILE.**
HOHLER KUNSTSTOFFKÖRPER, DER BESONDERS ZUR VERKLEIDUNG VON LENKRADSÄULEN IN KRAFTFAHRZEUGEN VERWENDET WIRD
HOLLOW PLASTIC BODY WHICH IS USED, IN PARTICULAR, TO LINE STEERING WHEEL COLUMNS IN MOTOR VEHICLES

(30) Priorité: 13.05.2005 FR 0504858
(43) Date de publication de la demande: 23.01.2008
(73) Titulaire: Faurecia Interieur Industrie, 92000 Nanterre (FR)
(72) Inventeur: DOLE, Thierry, F-60650 Saint Germain La Poterie (FR)
(74) Mandataire: Domenego, Bertrand
(86) Numéro de dépôt international: PCT/FR2006/001043
(87) Numéro de publication internationale: WO 2006/120344

(56) Documents cités:
- US-A- 4 867 599
- PATENT ABSTRACTS OF JAPAN vol. 2002, no. 07, 3 juillet 2002 (2002-07-03) & JP 2002 067974 A (VISTEON ASIA PACIFIC INC; IKUYO CO LTD; NISHIKAWA KASEI CO LTD), 8 mars 2002 (2002-03-08)
- PATENT ABSTRACTS OF JAPAN vol. 1996, no. 09, 30 septembre 1996 (1996-09-30) & JP 08 119120 A (SUZUKI MOTOR CORP), 14 mai 1996 (1996-05-14)

## Description

L'invention concerne en général les pièces d'habillage moulées en matière plastique pour véhicules automobiles.

Plus précisément, l'invention concerne un corps creux en matière plastique destiné à être disposé autour d'une colonne de direction de véhicule automobile, ce corps comprenant deux demi-corps et des moyens d'assemblage de ces demi-corps l'un à l'autre suivant une direction longitudinale, les moyens d'assemblage comprenant une pluralité de pattes longitudinales chacune solidaire de l'un des demi-corps et des moyens d'encliquetage de chaque patte sur l'autre demi-corps, chaque demi-corps comprenant une coquille concave de concavité tournée vers l'autre demi-corps, cette coquille présentant une face intérieure, chaque patte comprenant un bras longitudinal présentant une extrémité solidaire du demi-corps correspondant et un relief faisant saillie le long d'une partie du bras opposée au demi-corps, ce relief comprenant une première portée d'accrochage.

Le document EP-1.391.351 décrit un tel corps creux, comprenant deux demi-corps assemblés par des pattes solidaires d'un des demi-corps, dont les reliefs viennent s'engager dans des fenêtres ménagées dans la coquille de l'autre demi-corps.

De tels corps creux doivent être fabriqués avec des tolérances extrêmement réduites, de façon à garantir un bon encliquetage des reliefs des pattes dans les fenêtres. En effet, la moindre déformation de la coquille dans laquelle les fenêtres sont ménagées peut provoquer un mauvais engagement des pattes, et par suite une mauvaise fixation des deux demi-corps l'un à l'autre. Par ailleurs, l'existence de fenêtres ménagées dans le corps creux donne à celui-ci un aspect peu agréable.

JP 2002-67974 décrit un corps creux selon le préambule de la revendication, avec un demi-corps comportant des pattes longitudinales et un autre demi-corps comportant des logements dans lesquels les pattes sont engagées de manière amovible.

Dans ce contexte, l'invention vise à proposer un corps creux dont les moyens d'assemblage sont moins sensibles aux tolérances de fabrication, et présentent un aspect plus soigné, et qui permette un démontage facile des deux demi-corps.

A cette fin, l'invention concerne un corps creux selon la revendication 1.

Le corps creux peut également présenter une ou plusieurs des caractéristiques ci-dessous, considérées individuellement ou selon toutes les combinaisons techniquement possibles :
- les parois sont des nervures formées sur la face interne du demi-corps ;
- chaque relief est ménagé sur une face de la patte correspondante sensiblement perpendiculaire à la face interne du demi-corps portant ladite patte ;
- les angles d'inclinaison des plans de contact sont compris entre 50° et 70°
- au moins un logement présente, d'un côté opposé à la face interne du demi-corps, un voile de fermeture solidarisant les deux parois l'une à l'autre ;
- les pattes et les logements sont venus de moulage avec les demi-corps ;
- les pattes sont creuses ;
- les bras des pattes comprennent deux parties planes en vis-à-vis, espacées l'une de l'autre, et des cloisonnements solidarisant les deux parties planes; et
- lesdites parties planes sont perpendiculaires à la zone de face interne du demi-corps portant la patte.

D'autres caractéristiques et avantages de l'invention ressortiront de la description qui en est faite ci-dessous, à titre indicatif et nullement limitatif, en référence aux figures annexées, parmi lesquelles :
- la figure 1 est une vue en perspective, éclatée, du corps creux de l'invention,
- la figure 2 est une vue agrandie d'un détail de la figure 1, montrant un logement de réception des pattes,
- la figure 3 est une vue de côté du logement de la figure 2, une patte étant engagée dans ce logement, et
- la figure 4 est une vue similaire à celle de la figure 2, pour une variante de réalisation de l'invention.

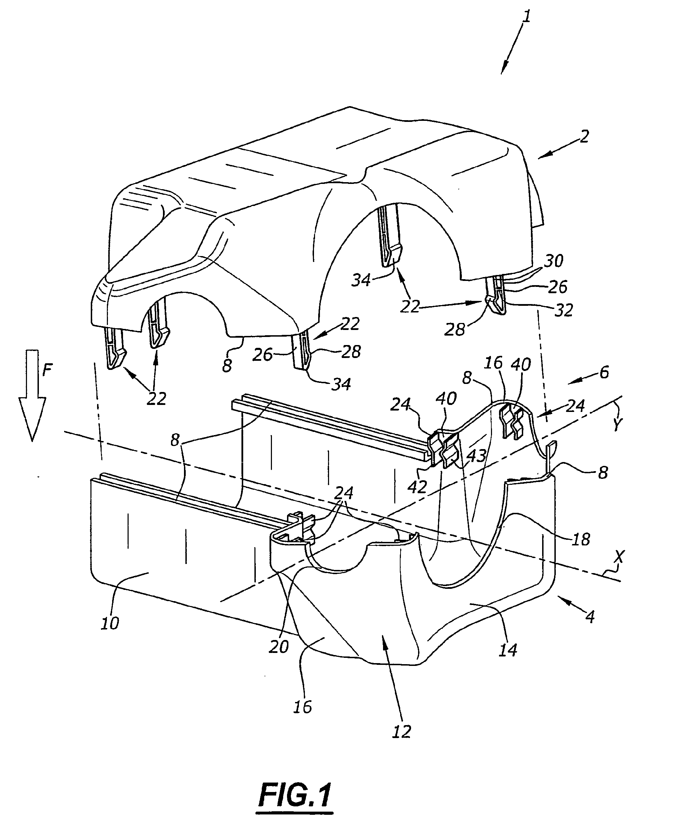

Le corps creux 1, représenté sur la figure 1, est un corps moulé en matière plastique, destiné à être disposé autour d'une colonne de direction de véhicule automobile (non représentée).

Le corps 1 comprend des demi-corps supérieur 2 et inférieur 4, et des moyens 6 d'assemblage des demi-corps l'un avec l'autre suivant une direction longitudinale matérialisée par la flèche F de la figure 1. Les demi-corps supérieur 2 et inférieur 4 forment chacun une coquille concave de concavité tournée vers l'autre demi-corps, présentant un bord libre 8, les demi-corps supérieur 2 et inférieur 4 étant en contact l'un avec l'autre le long de leurs bords libres 8 respectifs.

La colonne de direction est susceptible de traverser le corps creux 1 suivant un axe X perpendiculaire à la direction longitudinale.

Chaque demi-corps 2, 4 comprend une partie parallélépipédique 10, de section rectangulaire en U perpendiculairement à l'axe X, se prolongeant axialement par une partie élargie 12. Les bords libre 8 de la partie parallélépipédique 10 sont droits, parallèles à l'axe X et s'étendent dans un premier plan de contact perpendiculaire à la direction longitudinale. La partie 10 est ouverte à ses deux extrémités axiales.

La partie élargie 12 présente, à l'opposé de la partie 10, une face plane 14, sensiblement perpendiculaire à l'axe X, et deux nez 16, de part et d'autre de la face 14, réunissant la face 14 à une extrémité axiale de la partie 10.

La face 14 est pleine et présente, suivant une direction transversale Y perpendiculaire à l'axe X et à la direction longitudinale, une largeur sensiblement égale à celle de la partie 10. Les nez 16 font saillie transversalement par rapport à la partie 10 et à la face 14. La face 14 comprend une ouverture centrale 18, semi-circulaire, ménagée dans le bord libre 8. Cette ouverture 18 est centrée sur l'axe X.

Chaque nez 16 comprend une ouverture latérale semi-circulaire 20 ménagée dans le bord libre 8. Les ouvertures latérales 20 sont disposées du côté des nez 16 opposé à la partie 10. Ces ouvertures présentent chacune un axe central s'inscrivant dans le plan défini par l'axe X et la direction Y, et sont symétriques l'une de l'autre par rapport à l'axe X.

Le bord libre 8 de la partie élargie 12 s'inscrit dans un second plan de contact perpendiculaire à la direction longitudinale, décalé vers le haut de la figure 1 par rapport au premier plan de contact.

Les deux ouvertures centrales 18 des demi-corps supérieur 2 et inférieur 4 forment ensemble une ouverture circulaire centrée sur l'axe X susceptible de recevoir la colonne de direction. De même, les ouvertures latérales 20 des demi-corps supérieur 2 et inférieur 4 forment ensemble deux ouvertures circulaires, susceptibles de recevoir d'autres organes de la direction du véhicule automobile.

La colonne de direction est susceptible de traverser le corps creux 1, de telle sorte qu'elle s'engage à travers l'orifice circulaire formé par les ouvertures 18, traverse la partie élargie 12 puis la partie 10 suivant un axe central de celle-ci, et sort du corps creux 1 par l'extrémité axiale ouverte de la partie 10 opposée à la partie élargie 12.

Les bords libres 8 de la partie 10 du demi-corps inférieur 4 sont conformés en rainures, parallèles à l'axe X, et aptes à recevoir les bords libres 8 de la partie 10 du demi-corps supérieur 2.

Les moyens d'assemblage 6 des deux demi-corps l'un à l'autre comprennent six pattes longitudinales 22, solidaires du demi-corps supérieur 2, et six logements 24, ménagés sur une face intérieure du demi-corps inférieur 4, formant des moyens d'encliquetage des pattes 22.

Les pattes 22 et les logements 24 sont ménagés dans la partie élargie 12 du corps creux 1.

Les pattes 22 font saillie longitudinalement vers le demi-corps 4 inférieur par rapport au second plan de contact entre les deux demi-corps. Chaque patte 22 comprend un bras 26 rectiligne longitudinal présentant une extrémité solidaire du demi-corps supérieur 2 et un relief 28 faisant saillie le long d'une partie du bras opposée au demi-corps 2.

Chaque bras 26 comprend deux parois 30 planes, appelées également parties planes, parallèles l'une à l'autre et espacées l'une de l'autre, et des cloisonnements 32 solidarisant les deux parois 30 l'une à l'autre à intervalles réguliers. Les deux parois 30 sont perpendiculaires à la zone de la face interne du demi-corps 2 sur laquelle la patte est fixée.

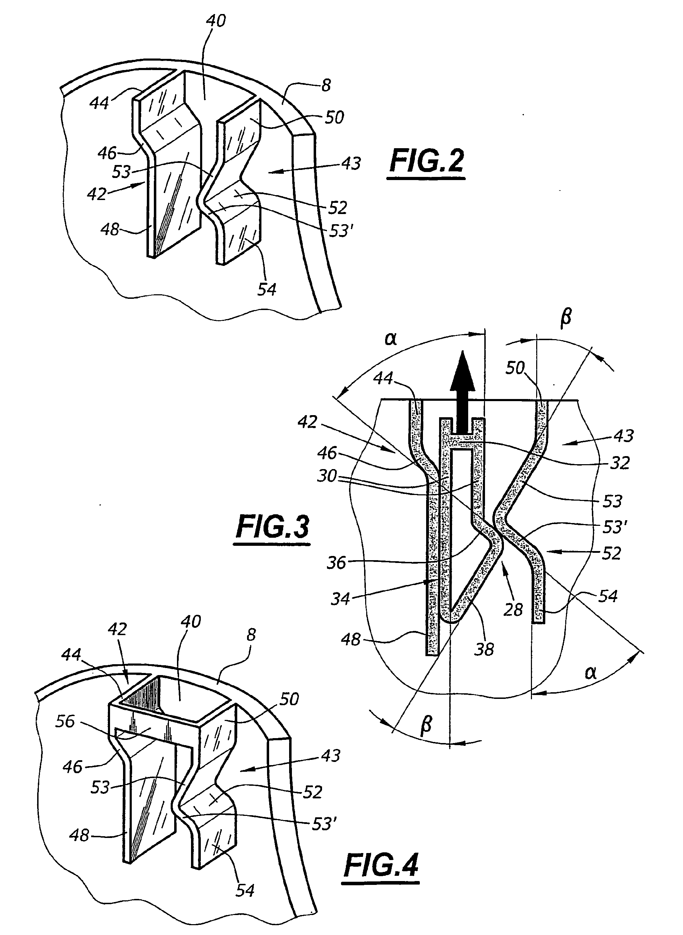

Comme le montre la figure 3, les parois 30 forment, à l'extrémité libre de la patte 22, une tête 34 de section triangulaire dans un plan perpendiculaire aux parois 30. A cet effet, l'une des parois 30 forme une première face 36 s'écartant de l'autre paroi 30, prolongée par une deuxième face 38 convergeant vers l'autre paroi 30 et rejoignant celle-ci de façon à former une extrémité en pointe de la patte 22. Les faces 36 et 38 définissent le relief 28. Comme le montre la figure 3, la tête 34 est creuse, de telle sorte que le relief 28 est susceptible de se déformer.

Les faces 36 et 38 forment avec la face 30 opposée, respectivement, des angles α et β. L'angle a est supérieur à l'angle β. Les faces 36 et 38 forment entre elles un angle de sensiblement 90°.

L'angle α est typiquement compris entre 50° et 70°, et est choisi de préférence égal à sensiblement 60°.

L'angle β est typiquement compris entre 20° et 40° et est de préférence choisi égal à sensiblement 30°.

Les logements 24 comprennent chacun deux parois 42, 43 en vis-à-vis sensiblement parallèles, formées par des nervures ménagées sur la face interne du demi-corps inférieur 4, et s'étendant sensiblement perpendiculairement à la zone de face interne portant ces parois. Ces parois s'étendent chacune suivant une direction générale longitudinale à partir du bord libre 8. Elles délimitent entre elles, au niveau du bord libre 8, une ouverture 40 d'introduction de la patte 22 correspondante dans le logement 24. La paroi 42 comprend, successivement à partir du bord libre 8, un premier pan 44 longitudinal prolongé par un second pan 46 incliné vers la paroi 43, lui-même prolongé par un troisième pan 48 longitudinal relativement plus proche de la paroi 43 que le premier pan 44.

La paroi 43 comprend, au niveau du bord libre 8, un premier pan 50 longitudinal, disposé en vis-à-vis des pans 44 et 46 de la paroi 42. La paroi 43 comprend encore un coin central 52 convexe, formant une restriction rétrécissant localement l'écartement entre les parois 42 et 43. La paroi 43 comprend enfin un troisième pan droit longitudinal 54 s'inscrivant dans le prolongement du premier pan 50.

La restriction 52 est délimitée par deux faces libres 53 et 53', respectivement tournées vers l'ouverture 40 et à l'opposé de l'ouverture 40, se rejoignant au sommet de la restriction 52. Les faces 53' et 53 forment, par rapport à la direction longitudinale, des angles α et β égaux respectivement aux angles formés par les faces 36 et 38 du relief 28.

Les pans 48 et 50/54 présentent entre eux un écartement prédéterminé, supérieur à l'épaisseur maximale de la patte 22, prise entre le sommet du relief 28 et la paroi 30 opposée au relief.

En revanche, l'écartement entre le pan 48 et le sommet de la restriction 52 est inférieur à ladite épaisseur maximale de la patte 22, de façon à retenir la patte 22 dans le logement 24 une fois la patte 22 encliquetée.

Les six pattes 22 sont réparties le long du bord libre 8 de la partie élargie 12 du demi-corps supérieur 2. Une patte 22 est située entre chacune des ouvertures latérales 20 et l'ouverture centrale 18.

Les pattes 22 et les logements 24 sont venus de moulage avec les demi-corps 2 et 4.

Lors de l'introduction des pattes 22 dans les logements 24, la partie en pointe de la tête 34 pénètre d'abord par l'ouverture 40. Ceci est facilité du fait que le premier pan 44 est écarté de la paroi 43.

Puis, la face 38 de la tête 34 vient au contact de la face 53 de la restriction 52 tournée vers l'ouverture 40. La face 38 glisse sur la restriction 52 et amène la paroi 30 opposée au relief 28 contre le pan 48 de la paroi 42.

Quand le mouvement longitudinal de la patte 22 se poursuit, il se produit une déformation élastique du relief 28, de telle sorte que le relief 28 franchit la restriction 52 et que l'encliquetage de la patte 22 dans le logement 24 est réalisé.

Ceci est facilité par le fait que la tête 34 est creuse. Ceci est également facilité par le profil en pointe de la tête 34, l'angle β étant choisi de façon à faciliter la pénétration de la patte.

On se trouve alors dans la situation de la figure 3, dans laquelle les bords libres 8 des demi-corps supérieur 2 et inférieur 4 sont en contact l'un contre l'autre, la face 36 de la tête 34 étant alors en appui contre la face 53' de la restriction 52 opposée à l'ouverture 40. Les faces 36 et 53' forment donc des portées qui retiennent la patte 22 dans le logement 24. Le plan de contact de ces portées forme un angle α avec la direction longitudinale.

Comme le montre la figure 3, la paroi 42 forme un appui arrière de la patte, contre laquelle la paroi 30 de la patte 22 opposée au relief 28 est susceptible de glisser.

La patte 22 est susceptible d'être désengagée du logement 24 si l'on exerce une traction sur les demi-corps 2 et 4, dans le sens d'un écartement des demi-corps l'un de l'autre, avec une force longitudinale prédéterminée.

A cet effet, l'angle α est choisi de façon à permettre une déformation élastique du relief 28 , quand une telle force longitudinale est exercée sur les demi-corps 2 et 4.

Le corps décrit ci-dessus présente de multiples avantages. Les tolérances de fabrication des demi-corps supérieur et inférieur n'ont pratiquement pas d'impact sur la qualité de l'encliquetage des pattes 22 dans les logements 24. En effet, des tolérances de fabrication élevées pour les demi-corps se traduiront essentiellement par une simple modification des zones en appui mutuel des surfaces 36 et 53'.

Par ailleurs, il est possible de réaliser des pattes 22 et des restrictions 52 portant l'une contre l'autre sur une grande longueur. Ceci permet une tolérance importante sur la position longitudinale de la patte 22 par rapport au logement 24 quand les bords libres 8 des deux demi-corps viennent en contact l'un avec l'autre.

L'aspect du corps creux est très avantageux puisqu'aucun des éléments des moyens d'assemblage des deux demi-corps l'un avec l'autre n'est visible une fois les demi-corps assemblés.

De plus, la séparation des deux demi-corps l'un de l'autre est facile, puisque cette séparation est réalisée par une simple traction longitudinale.

La position de la patte 22 par rapport à la restriction 52 est particulièrement bien définie, du fait que cette patte est en appui arrière contre la paroi 42.

Enfin, du fait de la souplesse de la tête 34 de la patte et de la paroi 43, il est possible d'engager la patte 22 dans le logement 24 puis de la désengager un grand nombre de fois, sans abîmer la patte ou le logement.

Dans une variante de réalisation représentée sur la figure 4, chaque logement 24 comprend un voile de fermeture 56, solidarisant le pan 44 de la paroi 42 au pan 50 de la paroi 43.

Le voile 56 s'étend d'un côté du logement 24 opposé à la face interne du demi-corps 4, c'est-à-dire vers l'intérieur du corps creux. Il permet de rigidifier les parois 42 et 43, et de guider la patte 22 dans son mouvement de translation longitudinale.

En variante ou en supplément, la paroi 43 peut être rendue élastiquement déformable, vers la droite de la Figure 3, dans la région du coin 52.

## Revendications

1. Corps creux (1) en matière plastique destiné à être disposé autour d'une colonne de direction de véhicule automobile, ce corps (1) comprenant deux demi-corps (2, 4) et des moyens (6) d'assemblage de ces demi-corps (2, 4) l'un à l'autre suivant une direction longitudinale, les moyens d'assemblage (6) comprenant une pluralité de pattes longitudinales (22) chacune solidaire de l'un des demi-corps (2), et des moyens d'encliquetage (24) de chaque patte (22) sur l'autre demi-corps (4), chaque demi-corps (2, 4) comprenant une coquille concave de concavité tournée vers l'autre demi-corps (2, 4), cette coquille présentant une face intérieure, chaque patte (22) comprenant un bras longitudinal (26) présentant une extrémité solidaire du demi-corps (2) correspondant et un relief (28) faisant saillie le long d'une partie du bras (26) opposée au demi-corps (2), ce relief (28) comprenant une première portée d'accrochage (36), les moyens d'encliquetage (24) comprenant, pour chaque patte, un logement ménagé sur la face intérieure du demi-corps (4) correspondant, ce logement (24) présentant une ouverture (40) et étant délimité par au moins deux parois (42, 43) longitudinales parallèles, en vis-à-vis, d'écartement prédéterminé, dont une première paroi (42) forme un appui arrière de la patte (22) et une deuxième paroi (43) comprend au moins une restriction (52) rétrécissant localement l'écartement entre les deux parois (42, 43), cette restriction (52) comprenant une seconde portée (53'), les pattes (22) étant aptes à s'introduire longitudinalement dans les logements (24) par leurs ouvertures (40) respectives, les reliefs (28) étant aptes à franchir les restrictions (52) dans le sens longitudinal d'introduction des pattes (22) par déformation élastique des pattes (22) et/ou desdites deuxièmes parois (43), les reliefs (28) étant retenus par les restrictions (52) en sens inverse par leurs portées (36) respectives venant en contact avec les portées complémentaires (53') des restrictions (52) selon des plans inclinés d'un angle (α) prédéterminé par rapport à la direction longitudinale, ledit angle (α) étant choisi pour rendre les reliefs (28) aptes à franchir les restrictions (52) par déformation élastique dans ledit sens inverse quand les deux demi-corps (2, 4) sont écartés l'un de l'autre avec une force longitudinale prédéterminée, **caractérisé en ce que** les parois (42, 43) s'étendent dans des plans sensiblement perpendiculaires à la face interne du demi-corps (4) sur laquelle elles sont ménagées.

2. Corps selon la revendication 1, **caractérisé en ce que** les parois (42, 43) sont des nervures formées sur la face interne du demi-corps (4).

3. Corps selon l'une quelconque des revendications 1 à 2, **caractérisé en ce que** chaque relief (28) est ménagé sur une face de la patte (22) correspondante sensiblement perpendiculaire à la face interne du demi-corps (2) portant ladite patte (22).

4. Corps selon l'une quelconque des revendications 1 à 3, **caractérisé en ce que** les angles d'inclinaison (α) des plans de contact sont compris entre 50° et 70°.

5. Corps selon l'une quelconque des revendications 1 à 4 **caractérisé en ce qu'**au moins un logement (24) présente, d'un côté opposé à la face interne du demi-corps (4), un voile de fermeture (56) solidarisant les deux parois (42, 43) l'une à l'autre.

6. Corps selon l'une quelconque des revendications 1 à 5, **caractérisé en ce que** les pattes (22) et les logements (24) sont venus de moulage avec les demi-corps (2, 4).

7. Corps selon l'une quelconque des revendications 1 à 6, **caractérisé en ce que** les pattes (22) sont creuses.

8. Corps selon l'une quelconque des revendications précédentes, **caractérisé en ce que** les bras (26) des pattes (22) comprennent deux parties planes (30) en vis-à-vis, espacées l'une de l'autre, et des cloisonnements (32) solidarisant les deux parties planes (30).

9. Corps selon la revendication8, **caractérisé en ce que** lesdites parties planes (30) sont perpendiculaires à la zone de face interne du demi-corps (2) portant la patte (22).

## Claims

1. A hollow body (1) of plastics material for placing around a motor vehicle steering column, the body (1) comprising two half-bodies (2, 4) and assembly means (6) for assembling the half-bodies (2, 4) to each other in a longitudinal direction, the assembly means (6) comprising a plurality of longitudinal tabs (22) each secured to one of the half-bodies (2), and snap-fastener means (24) for fastening each tab (22) to the other half-body (4), each half-body (2, 4) comprising a concave shell with its concave side facing towards the other half-body (2, 4), said shell presenting an inside face, each tab (22) comprising a longitudinal arm (26) presenting one end secured to the corresponding half-body (2) and a portion in relief (28) projecting along a portion of the arm (26) that is remote from the half-body (2), said portion in relief (28) including a first catch bearing surface (36), the snap-fastener means (24) comprising, for each tab, a housing formed on the inside face of the corresponding half-body (4), the housing (24) presenting an opening (40) and being defined by at least two facing parallel longitudinal walls (42, 43) at a predetermined spacing, comprising a first wall (42) forming a rear bearing surface for the tab (22) and a second wall (43) including at least one constriction (52) locally narrowing the spacing between the two walls (42, 43), the constriction (52) having a second bearing surface (53'), the tabs (22) being suitable for being inserted longitudinally into the housings (24) via their respective openings (40), the portions in relief (28) being suitable for going past the constrictions (52) in the longitudinal insertion direction of the tabs (22) by elastic deformation of the tabs (22) and/or of said second walls (43), the portions in relief (38) being held in the opposite direction by the constrictions (52) by virtue of the respective bearing surfaces (26) of the tabs (22) coming into contact with the complementary bearing surfaces (53') of the constrictions (52) on planes that are inclined at a predetermined angle (α) relative to the longitudinal direction, said angle (α) being selected to make the portions in relief (28) suitable for going past the constrictions (52) by elastic deformation in the opposite direction when the two half-bodies (2, 4) are moved apart from each other by means of a predetermined longitudinal force, **characterized in that** the walls (42, 43) lie in planes substantially perpendicular to the inside face of the half-body (4) on which they are formed.

2. A body according to claim 1, **characterized in that** the walls (42, 43) are ribs formed on the inside face of the half-body (4).

3. A body according to any one of claims 1 to 2, **characterized in that** each portion in relief (28) is formed on a face of the corresponding tab (22) that is substantially perpendicular to the inside face of the half-body (2) carrying said tab (22).

4. A body according to any one of claims 1 to 3, **characterized in that** the angles of inclination (α) of the contact planes lie in the range 50° to 70°.

5. A body according to any one of claims 1 to 4, **characterized in that** at least one housing (24) presents a closure web (56) on a side remote from the inside face of the half-body (4), the closure web (56) interconnecting the two walls (42, 43).

6. A body according to any one of claims 1 to 5, **characterized in that** the tabs (22) and the housings (24) are integrally molded with the half-bodies (2, 4).

7. A body according to any one of claims 1 to 6, **characterized in that** the tabs (22) are hollow.

8. A body according to any preceding claim, **characterized in that** the arms (26) of the tabs (22) comprise two spaced-apart facing walls (30) together with partitions (32) interconnecting the two walls (30).

9. A body according to claim 8, **characterized in that** said walls (30) are perpendicular to the zone of the inside face of the half-body (2) that carries the tab (22).

## Patentansprüche

1. Hohlkörper (1) aus Kunststoff, der dafür bestimmt ist, um eine Lenkradsäule für Kraftfahrzeuge herum angeordnet zu werden, wobei dieser Körper (1) zwei Halbkörper (2, 4) und Vorrichtungen (6) zur Verbindung dieser Halbkörper (2, 4) miteinander entlang einer Längsrichtung aufweist, wobei die Verbindungsvorrichtungen (6) eine Vielzahl von länglichen Befestigungshaken (22) aufweisen, die jeweils einstückig mit dem einen der Halbkörper (2) ausgebildet sind, und Vorrichtungen zum Einrasten (24) jedes Befestigungshakens (22) auf dem anderen Halbkörper (4), wobei jeder Halbkörper (2, 4) eine konkave Schale mit zu dem anderen Halbkörper (2, 4) hin gewandter Konkavität aufweist, wobei diese Schale eine Innenfläche aufweist, wobei jeder Befestigungshaken (22) einen Längsarm (26) aufweist, der ein einstückig mit dem entsprechenden Halbkörper (2) ausgebildetes Ende und eine Erhöhung (28) besitzt, die entlang eines dem Halbkörper (2) gegenüber liegenden Armbereiches (26) vorspringt, wobei diese Erhöhung (28) eine erste Einhakfläche (36) aufweist, wobei die Einrastvorrichtungen (24) für jeden Befestigungshaken eine an der Innenfläche des entsprechenden Halbkörpers (4) ausgebildete Aufnahme aufweisen, wobei diese Aufnahme (24) eine Öffnung (40) aufweist und von zumindest zwei mit vorbestimmtem Zwischenraum einander gegenüberliegenden, parallel angeordneten Längswänden begrenzt ist, wovon eine erste Wand (42) eine hintere Auflage für den Befestigungshaken (22) bildet und eine zweite Wand (43) zumindest eine Einengung (52) aufweist, die den Zwischenraum zwischen den beiden Wänden (42, 43) lokal verengt, wobei diese Einengung (52) eine zweite Auflagefläche (53') aufweist, wobei die Befestigungshaken (22) dafür geeignet sind, sich in Längsrichtung in die Aufnahmen (24) über ihre jeweiligen Öffnungen (40) einzuschieben, wobei die Erhöhungen (28) geeignet sind, die Einengungen (52) in der Längseintrittsrichtung der Befestigungshaken (22) durch elastische Verformung der Befestigungshaken (22) und/oder der zweiten Wände (43) zu passieren, wobei die Erhöhungen (28) von den Einengungen (52) in umgekehrter Richtung dadurch gehalten werden, dass ihre jeweiligen Auflageflächen (36) mit den komplementären Auflageflächen (53') der Einengungen (52) entlang von Ebenen in Berührung kommen, die um einen vorbestimmten Winkel (α) bezüglich der Längsrichtung geneigt sind, wobei der Winkel (α) derart gewählt ist, dass er die Erhöhungen (28) in die Lage versetzt, die Einengungen (52) durch elastische Verformung in umgekehrter Richtung zu passieren, wenn die beiden Halbkörper (2, 4) mit einer vorbestimmten Längskraft auseinander gezogen werden, **dadurch gekennzeichnet, dass** sich die Wände (42, 43) in Ebenen erstrecken, die praktisch senkrecht zu der Innenfläche des Halbkörpers (4), an welchem sie ausgebildet sind, liegen.

2. Körper gemäß Anspruch 1, **dadurch gekennzeichnet, dass** die Wände (42, 43) auf der Innenfläche des Halbkörpers (4) gebildete Rippen sind.

3. Körper gemäß irgendeinem der Ansprüche 1 bis 2, **dadurch gekennzeichnet, dass** jede Erhöhung (28) auf einer Fläche des entsprechenden Befestigungshakens (22) ausgebildet ist, die praktisch senkrecht zu der Innenfläche des den Befestigungshaken (22) tragenden Halbkörpers (2) liegt.

4. Körper gemäß irgendeinem der Ansprüche 1 bis 3, **dadurch gekennzeichnet, dass** die Neigungswinkel (α) der Kontaktebenen zwischen 50° und 70° liegen.

5. Körper gemäß irgendeinem der Ansprüche 1 bis 4, **dadurch gekennzeichnet, dass** zumindest eine Aufnahme (24) auf einer der Innenfläche des Halbkörpers (4) gegenüberliegenden Seite eine Verschlussabdeckung (56) aufweist, welche die beiden Wände (42, 43) einstückig miteinander ausbildet.

6. Körper gemäß irgendeinem der Ansprüche 1 bis 5, **dadurch gekennzeichnet, dass** die Befestigungshaken (22) und die Aufnahmen (24) zusammen mit den Halbkörpern (2, 4) in einem Guss geformt sind.

7. Körper gemäß irgendeinem der Ansprüche 1 bis 6, **dadurch gekennzeichnet, dass** die Befestigungshaken (22) hohl ausgebildet sind.

8. Körper gemäß irgendeinem der vorherigen Ansprüche, **dadurch gekennzeichnet, dass** die Arme (26) der Befestigungshaken (22) zwei einander gegenüberliegende, voneinander beabstandet angeordnete ebene Bereiche (30) und Zwischenunterteilungen (32), welche die beiden ebenen Bereiche (30) einstückig miteinander ausbilden, aufweisen.

9. Körper gemäß Anspruch 8, **dadurch gekennzeichnet, dass** die ebenen Bereiche (30) senkrecht zu dem Bereich der Innenfläche des den Befestigungshaken (22) tragenden Halbkörpers (2) liegen.
